# EUROPEAN PATENT SPECIFICATION

(11) **EP 3 299 139 B1**
(45) Date of publication and mention of the grant of the patent: **01.05.2019**
(21) Application number: 17186996.9
(22) Date of filing: 21.08.2017
(51) Int. Cl.: B29C 45/14, B29D 19/00

(54) **CONTROL DEVICE HAVING A KNOB AND METHOD OF MANUFACTURING THEREOF**
STEUERUNGSVORRICHTUNG MIT KNOPF UND VERFAHREN ZUR HERSTELLUNG DAVON
DISPOSITIF DE COMMANDE AYANT UN BOUTON ET SON PROCÉDÉ DE FABRICATION

(30) Priority: 26.09.2016 GB 201616266
(43) Date of publication of application: 28.03.2018
(73) Proprietor: Aptiv Technologies Limited, St. Michael (BB)
(72) Inventor: POLAK, Andrzej, 50354 Huerth (DE)
(74) Representative: Robert, Vincent

(56) References cited:
- CN-U- 203 427 405
- US-A1- 2015 158 256

## Description

### TECHNICAL FIELD

The present invention relates to a control device having a rotating knob and to a method of manufacturing thereof. More particularly it relates to a rotating knob to be arranged in a vehicle, for example on the dashboard of the vehicle.

### BACKGROUND OF THE INVENTION

The invention is in the field of rotary knobs, typically used in an automobile for radio and/or Heating Ventilation and Air-Conditionning control.

Occupants of an automobile are very sensitive to the visual aspect and touch feel of rotary knobs. As nowadays organized in sub assembly blocks an essential characteristic for perceived quality resides in smaller and more uniform gaps between knob components: zero gap is an ultimate target. The other aspect relates to touch feel which results mainly from surface characteristics (soft paint or soft material, like rubber) and from rigidity of components and connections between them: zero free play between components is an ultimate target.

A knob assembly typically comprises an outer ring that can move round axis of rotation and along the axis. Outer surface of this ring is painted or over molded with thermoplastic elastomers (TPE). A galvanic coated ring, used for decoration, is made out of plastic as separate part and mounted to the outer ring by the use of clipping features. Top surface of the knob is usually made as a separate part, injection molded, mounted to the outer ring by use of clipping features. The assembly knob is guided in the housing thanks to sliding or rotating bearings.

When rotated by a user, the assembly knob provides input in angular position tracked by encoder or light barrier placed on a printed circuit board (PCB). When pushed along the axis by a user, the assembly provides input to a rubber dome or micro switch to create ON/OFF status.

The components of assembly are typically plastic molded parts. To avoid unequal gaps, the components are provided with precise positioning ribs. In order to compensate for tolerances and thermal expansion of plastic material, some clipping features are designed to ensure permanent preload between the parts which limits relative movements. To avoid squeak noise issue resulting from micro movements between a chrome coated ring and the surrounding plastic parts a special low friction plastic materials is used. When a TPE surface on the outer ring is requested by a customer styling, the outer ring is made as a two shot injection molded part (TPE + plastic material). In this case, in some designs, a chrome ring is so located that it comes in contact with TPE material to minimize risk of noise issue.

The most advanced product designs seen on the market consist of 2 shot injection moded parts where the outer ring is integrated with a cap as one part and TPE material is injected on the outer ring surface. The chrome coated ring is then mounted to the outer ring by use of clipping features.

There is no available solution to have a control knob with an overmolded outer ring made of TPE material and the remaining part of the control knob being fully coated with chrome without using multiple parts attached together with clipping features.

It is also known from document US2015/0158256A1 a control knob made of several plastic materials wherein a decoration member is etched using chromic acid to deposit a layer of palladium that is then plated with chrome. Such a method to deposit chrome on a metal layer is disclosed in document CN203427405 U.

### SUMMARY OF THE INVENTION

The present invention proposes to solve the above mentioned problem by providing a control device for an automotive vehicle comprising a knob made of plastic material, said knob being provided with an outer ring made of elastomeric material, said outer ring being coaxial with the knob axis, characterized in that said knob is an integrally molded piece of electrically conductive plastic comprising conductive fillers that are metal particles or carbon-based particles, said outer ring being overmolded on a peripheral portion of the knob, and in that the external surface of the knob is provided with a chrome coating deposited by an electroplating process.

According to other features of the invention:
- the knob comprises a cap portion at a first axial end, said cap portion defining a closed surface continuously in contact with an edge of the outer ring and said cap portion being integrally molded with the knob;
- the knob is provided with a stem portion extending axially from the bottom part of the cap portion towards a second axial end, said stem portion being integrally molded with the knob.

The invention also proposes a manufacturing method for the control device comprising the steps of:
- injecting a knob made of an integrally molded piece of electrically conductive plastic material together with an outer ring made of non-conductive elastomeric material,
- depositing a layer of chrome material on the outer surface of the knob by electroplating.

Preferably, the step of depositing a layer of chrome material comprises a preliminary step of depositing a layer of copper.

Advantageously, the knob is provided with a stem portion and, during the step of layer deposition, the cathode used for the electroplating process is attached to the stem portion.

### BRIEF DESCRIPTION OF THE DRAWINGS

The present invention is now described by way of example with reference to the accompanying drawings in which:
- Figure 1 is a perspective view showing a control device according to an embodiment of the invention.
- Figure 2 to 5 are similar cross section views of the control device of figure 1 illustrating schematically several steps of the method of manufacturing the control device according to an embodiment of the invention.

### DESCRIPTION OF THE PREFERRED EMBODIMENTS

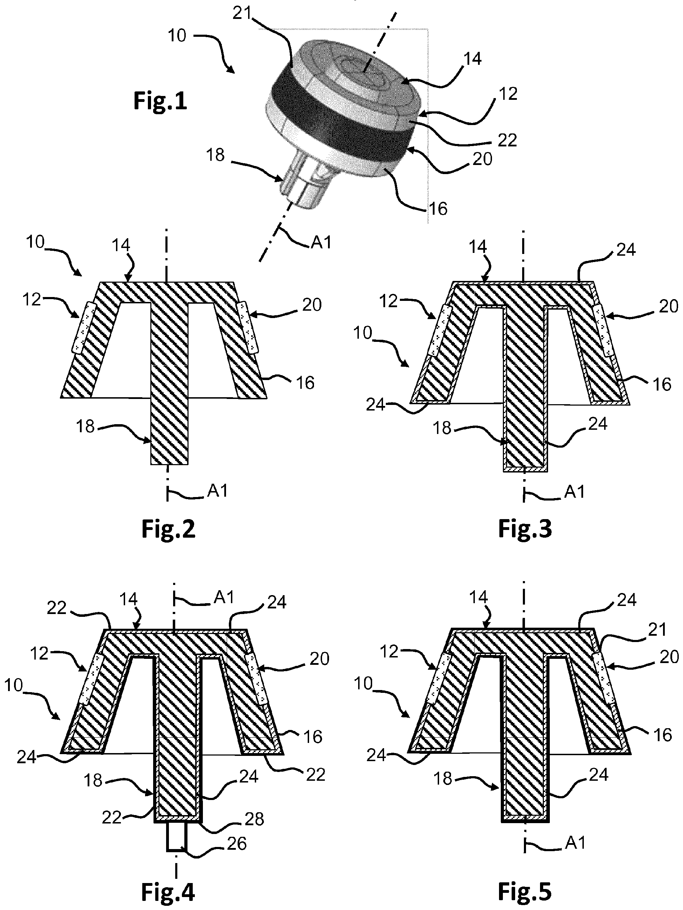

Hereinafter, a control device 10 for an automotive vehicle according to an embodiment of the present invention will be described with reference to figure 1 and figure 5.

As shown on the figures, the control device 10 comprises a knob 12 having a substantially cylindrical, or frusto-conical, shape with a circular cross-section. The knob central axis A1 extends vertically, with reference to figure 2, and comprises at its top end a cap portion 14. The bottom end of the knob 12 is made of a sleeve portion 16 and a stem 18 extends axially from the bottom part of the cap portion 14 downwards.

The knob 12 is provided with an outer ring 20 made of elastomeric material such as thermoplastic elastomer (TPE) or any other rubber type material. The outer ring 20 constitutes a generally cylindrical or frustoconical grip surface helping a user to manipulate and to rotate the knob 12 when in use.

The stem 18 is designed for mounting on a rotating support element (not shown), for example the shaft of an encoder, in order to connect the knob 12 to a control unit (not shown). The stem 18 can be made tubular or have any other shape suitable for its function.

According to the invention, the knob 12 is made of electrically conductive plastic. Electrically conductive plastic are well known. They are made of thermoplastic comprising
conductive fillers that are metal particles or carbon-based particles incorporated into the thermoplastic material. The conductive plastic has to be suitable both for galvanic coating and current conduction.

The knob 12 is made by injection molding in one piece with the stem 18. The outer ring 20 is overmolded on the outer surface of the knob 12 according to a two shot injection molding process with the knob 12. Thus the outer surface of the cap portion 14 is in contact all along the upper edge 21 of the outer ring 20.

The outer surfaces of the knob 12 and the stem 18 are entirely covered with a chrome layer 22 applied by electroplating.

A process for applying the chrome layer 22 will now be described in connection with figures 2 to 5.

Figure 2 shows the control device 10 just after the two shot injection molding process which has provided the knob 12 with the stem 18 integrally molded in one part in plastic material and with the outer ring 20 overmolded on the outer surface of the knob 12.

First, as illustrated by figure 3, electroless plating is used to deposit a metal layer, preferably a copper layer 24, onto the plastic substrate which is constituted of the outer surfaces of the knob 12 and of the stem 18. The copper will not coat on the outer ring 20 which is made of TPE.

As part of the electroless plating process, the surface of the plastic constituting the knob 12 and the stem 18 is etched away using an oxidizing solution. Coating occurs when the plastic component (post-etching) is immersed in a solution containing metallic (copper) ions, which then bond to the plastic surface as a metallic coating.

Secondly, as illustrated by figure 4, an electroplating (or electrolytic plating) process is used to deposit the chrome layer 22 onto the copper layer 24.

As part of the electroplating process, the control device 10 is immersed in a solution. In the solution are chromium salts, connected to a positive source of current through a cathode 26. The cathode 26 is attached to the lower end 28 of the stem 18. An anodic (negatively charged) conductor (not shown) is also placed in the bath, which creates an electrical circuit in conjunction with the positively charged salts. The chromium salts are electrically attracted to the copper layer 24 where they create the chrome layer 22. As this process happens, the anodic conductor, typically made of chrome, i.e. the same type of metal as the chromium salts, dissolves into the solution and replaces the source of chromium salts, which is depleted during deposition.

At the end of the electroplating process, the cathode 26 is removed and the control device 10 is finalized as illustrated by figure 5.

The cathode 26 could not be attached to the cap portion 14 as the surface of the cap portion 14 is a decorative surface that has to be fully coated with chrome without any mark from the manufacturing process in order to ensure a perfect external appearance.

Thanks to the use of electrically conductive plastic for the knob 12, the electric current can go from the cathode 26 through the stem 18 and through the knob 12 to all the external surfaces coated with copper, allowing deposition of chrome by electroplating on the cap portion 14 despite the fact that the external surface of the cap portion 14 is separated from the other external surfaces of the knob by the outer ring 20.

## Claims

1. Control device (10) for an automotive vehicle comprising a knob (12) made of plastic material, said knob (10) being provided with an outer ring (20) made of elastomeric material, said outer ring (20) being coaxial with the knob axis (A1), **characterized in that** said knob (12) is an integrally molded piece of electrically conductive plastic comprising conductive fillers that are metal particles or carbon-based particles, said outer ring (20) being overmolded on a peripheral portion of the knob (12), and **in that** the external surface of the knob (12) is provided with a chrome coating (22) deposited by an electroplating process.

2. Control device (10) according to claim 1, **characterized in that** said knob (12) comprises a cap portion (14) at a first axial end, said cap portion (14) defining a closed surface continuously in contact with an edge (21) of the outer ring (20) and said cap portion (14) being integrally molded with the knob (12).

3. Control device (10) according to claim 2, **characterized in that** said knob (12) is provided with a stem portion (18) extending axially from the bottom part of the cap portion (14) towards a second axial end, said stem portion (18) being integrally molded with the knob (12).

4. Manufacturing method for a control device (10) according to claim 1 to be mounted in an automotive vehicle, said manufacturing method comprising the steps of:
- injecting a knob (12) made of an integrally molded piece of electrically conductive plastic material comprising conductive fillers that are metal particles or carbon-based particles, together with an outer ring (20) made of non-conductive elastomeric material,
- depositing a layer (22) of chrome material on the outer surface of the knob (12) by electroplating.

5. Manufacturing method according to claim 4, **characterized in that** the step of depositing a layer (22) of chrome material comprises a preliminary step of depositing a layer (24) of copper.

6. Manufacturing method according to claim 4 or 5, **characterized in that** the knob (12) is provided with a stem portion (18) and **in that**, during the step of layer deposition, a cathode (26) used for the electroplating process is attached to the stem portion (18).

## Patentansprüche

1. Steuervorrichtung (10) für ein Kraftfahrzeug, die einen Knopf (12) aus Kunststoffmaterial aufweist, wobei der Knopf (10) mit einem Außenring (20) aus Elastomermaterial versehen ist, wobei der Außenring (20) koaxial zu der Knopfachse (A1) ist, **dadurch gekennzeichnet, dass** der Knopf (12) ein integral geformtes Stück aus elektrisch leitfähigem Kunststoff ist, leitfähiges Füllmaterial aufweisend, das Metallpartikel oder Kohlenstoff-basierte Partikel sind, wobei der Außenring (20) an einem Umfangsabschnitt des Knopfes (12) umspritzt ist, und dadurch, dass die Außenfläche des Knopfes (12) mit einer Chrombeschichtung (22) versehen ist, die durch einen Galvanisierungsprozess aufgebracht wird.

2. Steuervorrichtung (10) gemäß Anspruch 1, **dadurch gekennzeichnet, dass** der Knopf (12) einen Kappenabschnitt (14) an einem ersten axialen Ende aufweist, wobei der Kappenabschnitt (14) eine geschlossene Oberfläche definiert, die kontinuierlich in Kontakt mit einem Rand (21) des Außenrings (20) ist, und der Kappenabschnitt (14) integral mit dem Knopf (12) geformt ist.

3. Steuervorrichtung (10) gemäß Anspruch 2, **dadurch gekennzeichnet, dass** der Knopf (12) mit einem Schaftabschnitt (18) versehen ist, der sich axial von dem unteren Teil des Kappenabschnitts (14) zu einem zweiten axialen Ende hin erstreckt, wobei der Schaftabschnitt (18) integral mit dem Knopf (12) geformt ist.

4. Herstellungsverfahren für eine Steuervorrichtung (10) gemäß Anspruch 1 zur Anbringung in einem Kraftfahrzeug, wobei das Herstellungsverfahren die Schritte aufweist:
- Einspritzen eines Knopfes (12) aus einem integral geformten Stück aus elektrisch leitfähigem Kunststoffmaterial, leitfähiges Füllmaterial aufweisend, das Metallpartikel oder Kohlenstoff-basierte Partikel sind, zusammen mit einem Außenring (20) aus einem nicht-leitfähigen elastomeren Material,
- Aufbringen einer Schicht (22) aus Chrommaterial auf der Außenfläche des Knopfes (12) durch Galvanisieren.

5. Herstellungsverfahren gemäß Anspruch 4, **dadurch gekennzeichnet, dass** der Schritt des Aufbringens einer Schicht (22) aus Chrommaterial einen vorausgehenden Schritt eines Aufbringens einer Kupferschicht (24) aufweist.

6. Herstellungsverfahren gemäß Anspruch 4 oder 5, **dadurch gekennzeichnet, dass** der Knopf (12) mit einem Schaftabschnitt (18) versehen ist, und dass, während des Schritts des Aufbringens der Schicht, eine Kathode (26), die für den Galvanisierungsprozess verwendet wird, an dem Schaftabschnitt (18) angebracht wird.

## Revendications

1. Dispositif de commande (10) pour un véhicule automobile, comprenant un bouton (12) fait en matière plastique, ledit bouton (10) étant doté d'une bague extérieure (20) faite en matière élastomère, ladite bague extérieure (20) étant coaxiale à l'axe (A1) du bouton,
**caractérisé en ce que** ledit bouton (12) est une pièce intégralement moulée en matière plastique électriquement conductrice comprenant des charges conductrices qui sont des particules de métal ou des particules à base de carbone, ladite bague extérieure (20) étant surmoulée sur une portion périphérique du bouton (12), et **en ce que** la surface extérieure du bouton (12) est dotée d'un revêtement de chrome (22) déposé par un processus d'électroplacage.

2. Dispositif de commande (10) selon la revendication 1, **caractérisé en ce que** ledit bouton (12) comprend une portion formant capuchon (14) à une première extrémité axiale, ladite portion formant capuchon (14) définissant une surface fermée continuellement en contact avec un bord (21) de la bague extérieure (20) et ladite portion formant capuchon (14) est intégralement moulée avec le bouton (12).

3. Dispositif de commande (10) selon la revendication 2, **caractérisé en ce que** ledit boutons (12) est doté d'une portion formant tige (18) s'étendant axialement depuis la partie de fond de la portion formant capuchon (14) en direction d'une seconde extrémité axiale, ladite portion formant tige (18) étant moulée intégralement avec le bouton (12).

4. Procédé de fabrication pour un dispositif de commande (10) selon la revendication 1 destiné à être monté dans un véhicule automobile, ledit procédé de fabrication comprenant les étapes consistant à :
- injecter un bouton (12) fait d'une pièce intégralement moulée en matière plastique électriquement conductrice comprenant des charges conductrices qui sont des particules de métal ou des particules à base de carbone, conjointement avec une bague extérieure (20) faite d'une matière élastomère non conductrice,
- déposer une couche (22) de matériau à base de chrome sur la surface extérieure du bouton (12) par électroplacage.

5. Procédé de fabrication selon la revendication 4, **caractérisé en ce que** l'étape de déposition d'une couche (22) de matériau à base de chrome comprend une étape préliminaire consistant à déposer une couche (24) de cuivre.

6. Procédé de fabrication selon la revendication 4 ou 5, **caractérisé en ce que** le bouton (12) est doté d'une portion formant tige (18) et **en ce que**, pendant l'étape de déposition de la couche, une cathode (26) utilisée pour le processus d'électroplacage est attachée sur la portion formant tige (18).
